(19) Europäisches Patentamt

European Patent Office

Office européen des brevets

(11) EP 1 236 997 A2

(12) EUROPEAN PATENT APPLICATION

(43) Date of publication:
04.09.2002 Bulletin 2002/36

(51) Int Cl.7: G01N 30/00

(21) Application number: 02004334.5

(22) Date of filing: 01.03.2002

(84) Designated Contracting States:
AT BE CH CY DE DK ES FI FR GB GR IE IT LI LU MC NL PT SE TR
Designated Extension States:
AL LT LV MK RO SI

(30) Priority: 02.03.2001 JP 2001058578

(71) Applicant: KAO CORPORATION
Chuo-ku, Tokyo (JP)

(72) Inventors:
• Hasegawa, Yoshihiro,
Tokyo Research Laboratories
Tokyo 131-8501 (JP)
• Saito, Shoji, Tokyo Research Laboratories
Tokyo 131-8501 (JP)

(74) Representative: HOFFMANN - EITLE
Patent- und Rechtsanwälte
Arabellastrasse 4
81925 München (DE)

(54) **Fragrance collection apparatus**

(57) The problem is to gain highly quantitative analysis of the entire fragrance components of flowering plants and the like by collecting components over a large range from low volatility components to high volatility components with high precision without a complex procedure. The components over a large range from low volatile to high volatile components are collected by combination of the adsorption method (adsorption tube 4) and the canister method (canister 6) used supplementary.

FIG.1

EP 1 236 997 A2

## Description

## TECHNICAL FIELD

This invention is related to a fragrance collection apparatus, fragrance collection methods, fragrance analysis methods and reproduced fragrance data preparation methods. In particular, it is related to fragrance collection apparatus, fragrance analysis methods and reproducible fragrance data preparation methods to reproduce fragrance existing in nature such as fragrance of forests, fragrance of flowers, fragrance of fruits chemically.

## BACKGROUND ART

The fragrance of flowering plants and the like which we sense by our olfactory sensor is due to the volatile component included in the headspace gas which is exhaled from the flowering plants and the like. Therefore if the fragrant component in the headspace gas is extracted and analyzed qualitatively and quantitatively by a mass spectrometer and the like properly, almost the same fragrance that we sense by our olfactory sensor may be reproduced chemically. That is desired fragrance may be developed effectively by the method.

JP 7-308370A describes a technique whereby the fragrance component is collected from the headspace gas and the fragrance reproduced based on results of analysis. In more detail, the reference describes the carrier adsorption method and the like for collecting fragrance from the headspace gas.

Also JP 2000-53992A describes a method for collecting fragrance of plants and flowers by contacting the sample to humid air or humid inert gas and then collecting the fragrant component together with the water condensed by cooling the humid air or humid inert gas (aqua space method).

In the carrier adsorption method for collecting fragrance where the fragrance component in the headspace gas is adsorbed on adsorbents such as charcoal and the like, the efficiency of extraction is good for low to medium volatile components but poor for highly volatile components. Therefore, highly quantitative results cannot be obtained in analysis of the total fragrant components of plants and flowers and the like.

It is expected that this defect of fragrance collection by the carrier adsorption method may be resolved by the aquaspace method of fragrance collection but the setup will be complex as measures to humidify air and the like and control methods for maintaining the degree of humidity at a designated value and the like will be necessary.

The present invention is made to resolve problems described above and aims to provide a fragrant collection apparatus with a non-complicated structure which collects components over a wide range from low volatile to high volatile components with high accuracy and enables highly quantitative analysis of the entire components of the plant and flower fragrance and the like.

## DISCLOSURE OF INVENTION

In order to accomplish the object, the fragrance collection apparatus of this invention has an adsorption vessel with an adsorption layer and a decompressed sealed vessel connected in a row to the adsorption vessel.

It is preferable for the fragrance collection apparatus of this invention to have at the entrance of the decompressed sealed vessel means to control the flow of the headspace gas that is sucked into the decompressed sealed vessel.

In the fragrance collection apparatus, the low to medium volatility components are collected in the adsorption vessel well by adsorption material, and highly volatile components that cannot be collected in the adsorption vessel will be collected in the decompressed sealed vessel allowing high precision collection of components over a wide range from low volatile components to high volatile components.

In the fragrance collection method of the invention, by use of an adsorption vessel with an adsorption layer and the decompressed sealed vessel connected in a row to the adsorption vessel, the fragrance component in the headspace gas is collected by the decompressed sealed vessel acting as a negative pressure source.

In the fragrance analysis method, it is preferable to use the decompressed sealed vessel as a negative pressure source and suck in the headspace gas in the specimen vessel into the decompressed sealed vessel through the adsorbed layer of the adsorption vessel and analyze the components adsorbed on the adsorption layer of the adsorption vessel and the components of the headspace gas sucked into the decompressed vessel each.

Also the fragrance analysis method preferably performs analysis of fragrance data by a programmed computer where the data list of impurity components is stored in the memory, and by inputting the data list of fragrant components analyzed by the fragrance analyzer and by comparing the fragrance data list and the impurity data list by computer processing, the components which coincide with each other are regarded as impurities and the corresponding impurities are deleted by computer processing from the data list, and fragrance component data list with impurities excluded will be outputted.

It is preferable that the in the fragrance analysis method, components which are collected by the fragrance collection method of the invention and analyzed by the analyzer may be inputted as the fragrance component data list.

In the fragrance analysis method, by computer data processing using the data list of fragrance component, fragrance component data list without impurity components may be obtained effectively.

A reproducible fragrance data preparing method of this invention is desirably a method for preparing data for fragrance reproduction by a programmed computer where the data of vapor pressure value of each fragrance component is stored in the memory, the data list of fragrance components to be reproduced (synthesized) is inputted and the content ratio of each fragrance component relative to the total components in the inputted data list is calculated. The vapor pressure value of each fragrance component may be acquired from the database stored in the memory. Then, the calculated content ratio of each fragrance component is revised according to the vapor pressure value of each fragrance component, and a prescribed value of each reproduced fragrance component will be prepared.

The data list of the fragrance components analyzed by the fragrance analysis method may be used as input data in the reproducible fragrance component data preparing method.

By the reproducible fragrance component data preparing method, by use of the vapor pressure values of each fragrance component in the database, the list of prescribed values of fragrance components may be obtained effectively by computer data processing. Also by the combination of the fragrance collection method and the fragrance analysis method above, reproduction of highly accurate fragrance data (or fragrance information) may be gained efficiently.

It is preferable that the production method of perfumery by this invention produces perfumery that substantially includes fragrance components based on the fragrance analysis method or the fragrance component data preparing method.

## BRIEF DESCRIPTION OF DRAWINGS

Fig. 1 shows an embodiment of the fragrance collection apparatus of the invention.
Fig. 2A shows a system for component analysis by the adsorption method.
Fig. 2B shows a system for component analysis by a canister.
Fig. 3A shows the TIC chromatogram that displays the component analysis results by the adsorption method.
Fig. 3B shows the TIC chromatogram that displays the component analysis results by the canister method.
Fig. 4 shows a block diagram of the computer system for fragrance analysis and reproduced fragrance acquisition.
Fig. 5 shows data list of the component analysis by the canister method.
Fig. 6A shows data list of the component analysis by the adsorption method.
Fig. 6B shows the data list of the fragrance components with the impurity components removed from the data list.
Fig. 7 shows an example of impurity data.
Figs. 8 and 9 show the output list of the prescribed fragrance components.

In each figure, 1 is a sample vessel, 4 is a adsorption tube, 8 is a negative pressure regulator, 11 is a heating disconnection device, 12 is a capillary column, 13 is a mass spectrometer, 14 is a cryofocus, 15 is a capillary column, 16 is a mass spectrometer, 100 is a computer, 102 is a fragrance data analysis section, 103 is a fragrance reproduction preparation section, 110 is a impurity database memory, 111 is a vapor pressure database memory.

## EMBODIMENTS OF THE INVENTION

In the following, embodiments of the invention will be explained in detail with reference to the drawings.

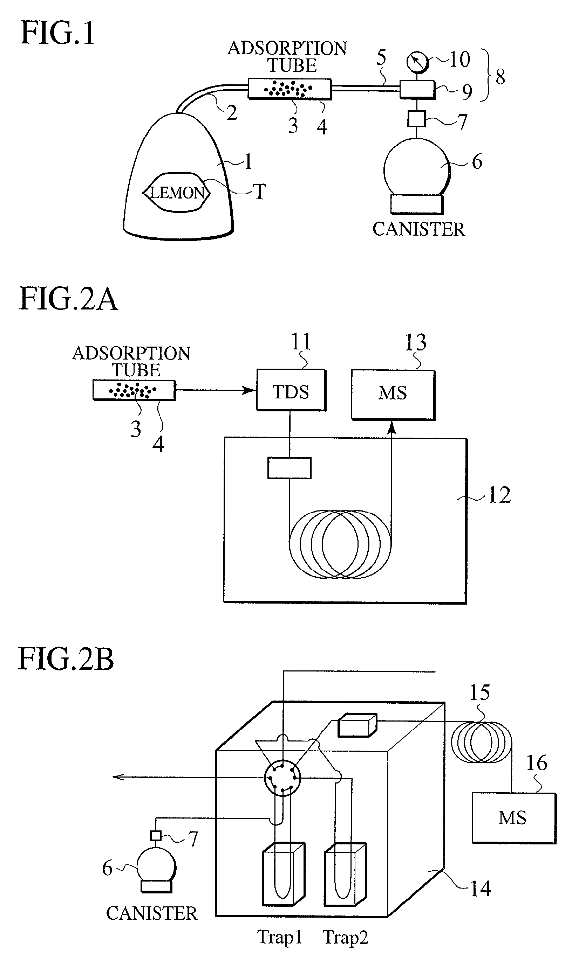

Fig. 1 shows one of the embodiments of the fragrance collecting apparatus of this invention. This fragrance collection apparatus is of the headspace gas collection type. In more detail, this apparatus includes a deep lid form sample container 1 which houses sample T from which fragrance of nature, such as lemon, plants and flowers emanate and are to be collected; and an adsorption chamber 4 which contains an adsorption layer 3 of adsorption material which is connected free to flow to the sample container 1 by duct 2; and hermetically sealed canister 6 which is connected free to flow to the adsorption chamber 4 by duct 5. Here, the canister 6 may act as a fragrance collection tube or vessel (or decompressed vessel or decompressed sealed vessel).

The adsorption tube 4 is provided with an adsorption layer 3 that has a breathable structure containing adsorption material. The adsorption material (capture material) includes granular active charcoal, Teneax TA (produced by GL Science Co.) made of heat resistant resin with a 2, 6 diphenul-p-phenylene oxide structures and the like.

The canister 6 is a sealed container made of stainless steel and has a stopper valve 7 at the entrance part. The inner wall of the container may be made non-active by coating with thin fused silica and the like and the container is used at reduced pressure.

In between the stopper valve 7 of the canister 6 and pipe 5, a negative pressure regulator 8 is provided. The negative pressure regulator 8 is a non-electrical flow flux-control device (and flow flux-measuring meter) and has a flow control part 9 and a pressure gauge 10. By the pressure difference between atmospheric pressure and the evacuated canister 6, the headspace gas (atmosphere) will flow into the canister 6 at a fixed rate. In collecting fragrance of nature, such as lemon, flowering plants and the like, it is preferable to adjust the flow quantity or flow rate by a negative pressure regulator 8 to the order 30ml/min. The quantity of fragrance components collected in the adsorption tube 4 and the canister 6 will be improved or increased by this lowering of the flow rate.

In collecting fragrance, as shown in Fig. 1, each apparatus are first connected by pipes, the sample T that is the fragrance emanating object is then placed in the sample container 1 and stopper valve 7 will be opened after the flow meter value of the negative pressure regulator is set at an adequate value.

When the stopper valve 7 is opened, the canister 6 will become a negative pressure source and headspace gas in the sample container 1 will flow through pipe 2, adsorption layer 3 in the adsorption tube 4 and through pipe 5 at a flow rate regulated and measured by the negative pressure regulator 8, into the canister 6.

In this way, the headspace gas components, in particular the low to medium volatile components will be collected by the adsorption material in the adsorption tube 4 and rest of the headspace gas will be absorbed and stored in the canister 6.

This evacuation of the headspace gas will not need negative pressure pumps and the like and will be made without electric power. Therefore, fragrance may be collected easily outdoor such as in forests and the like without necessity of electric power machinery. Also it is very quiet and fragrance may be collected with no noise.

When evacuation of the headspace gas by canister 6 is completed, the stopper valve 7 of canister 6 is closed and the pipe connections between each apparatus are disjointed. Thereafter, in the analysis room and the like, the adsorption tube 4 containing the adsorption layer 3 is connected to the mass spectrogram (MS) 13 by a thermal disconnection device (TDS) 11 and a capillary column 12 as shown in Fig. 2A.

Also, as shown in Fig. 2B, canister 6 is connected to a mass spectrograph (MS) 13 via a cryofocus (recondensation device) 14 and capillary column 15, and the stopper valve 7 is opened. The mass spectrograph 13 and mass spectrograph 16 may be the same devices; that is mass spectrograph 16 may be the mass spectrograph 13 as used in the foregoing operation (Fig. 2A).

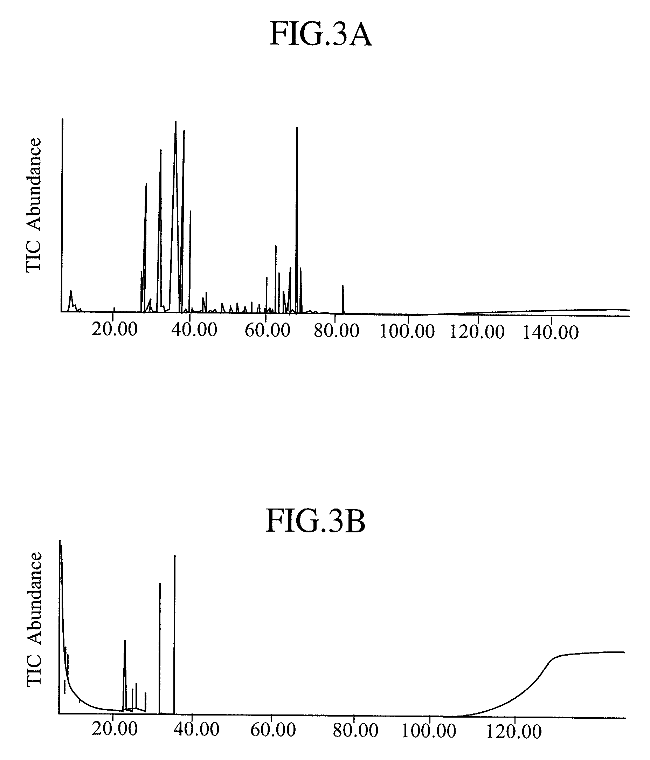

Fig. 3A shows an example Total Ion Chromatogram (TIC) of the result of the qualitative, quantitative analysis of components made on adsorbed or collected substances in the adsorption tube 4. Similarly, Fig. 3B shows an example TIC of the result of the qualitative, quantitative analysis of the headspace gas components collected in canister 6.

Here Figs. 3A and 3B show the TIC when the specimen T is a lemon. As shown in the figure, the low to medium volatility components are extracted well in adsorption tube 4 and high volatility component are extracted well in the canister 6.

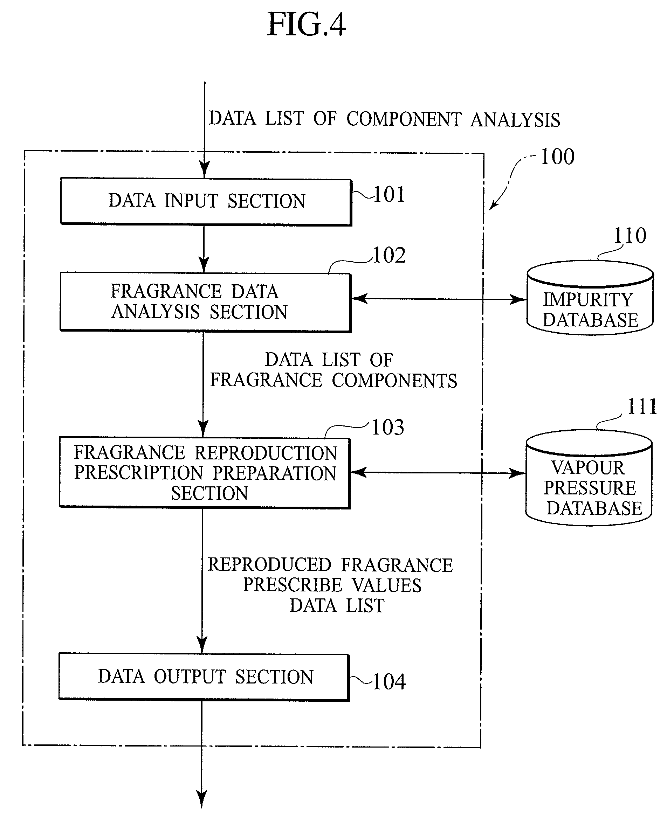

Next, the method to acquire reproduced fragrance (synthesized fragrance) on the basis of the result of the fragrance component analysis will be explained by reference to Figs. 4-9.

Fig. 4 shows a computer system to perform fragrance analysis and acquisition of the reproduced fragrance (synthesized fragrance).

As shown in the figure, this computer system has a computer 100 programmed for fragrance analysis and acquisition of reproduced fragrance, a memory section 110 which stores the impurity database, and a memory section 111 which stores the vapor pressure database.

The computer 100 has a data input section 101 by which a list of the data (data list) based on the qualitative, quantitative analysis made by the mass spectrograph 13, 16 (in the following the data may be called data list of components or component data list) is inputted, a fragrance data analysis section 102, fragrance reproduction prescription preparation section 103 and data output section 104. The fragrance data analysis section 102 and the fragrance reproduction prescription preparation section 103 may be implemented by computer programs to be processed by a computer (such as the computer 100).

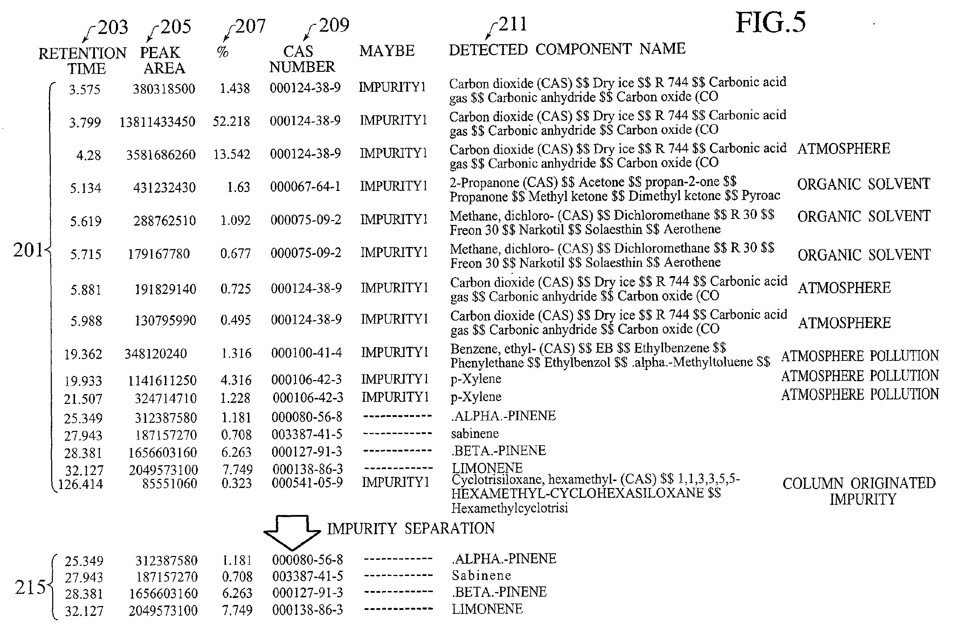

Fig. 5 shows the component data list (component list) 201 obtained by the canister method and inputted by the data input section 101. As shown in the figure, this component list 201 may include for each component, retention time 203, peak area 205, component ratio (%) 207, CAS (Chemical Abstracts Service) number 209, and detected component name 211.

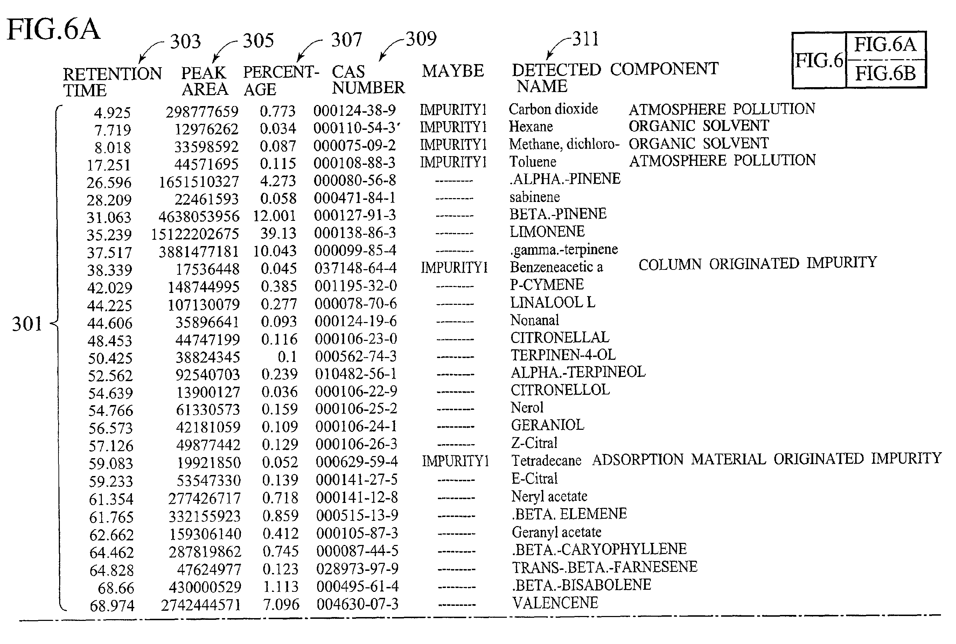

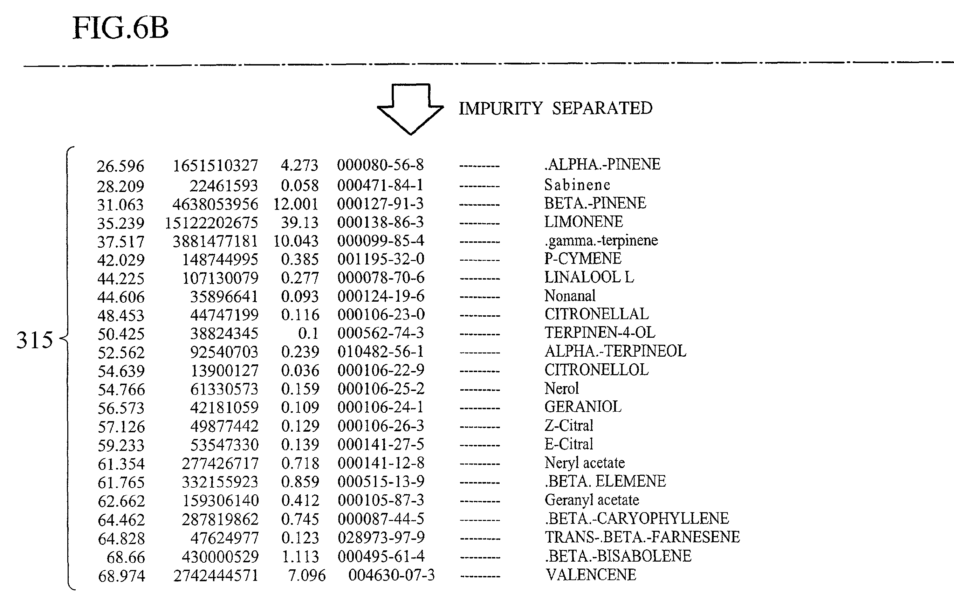

Similarly, Fig. 6 shows the component list 301 obtained by the adsorption method and inputted by the data input means 101. As shown in the figure, this component list 301 may also include data of the retention time 303, peak area 305, component ratio (%) 307, CAS (Chemical Abstracts Service) number 309 and the detected component name 311.

Referring again to Fig. 4, in the impurity database in memory 110, the names of impurity components which are likely to be included in the fragrance collection object sample T or impurity components which are likely to be mixed in the fragrance collection process are stored as CAS numbers for retrieval keys. Therefore this database may be searched by CAS numbers as the retrieval key. This impurity database may be used commonly for various kinds of fragrance analysis.

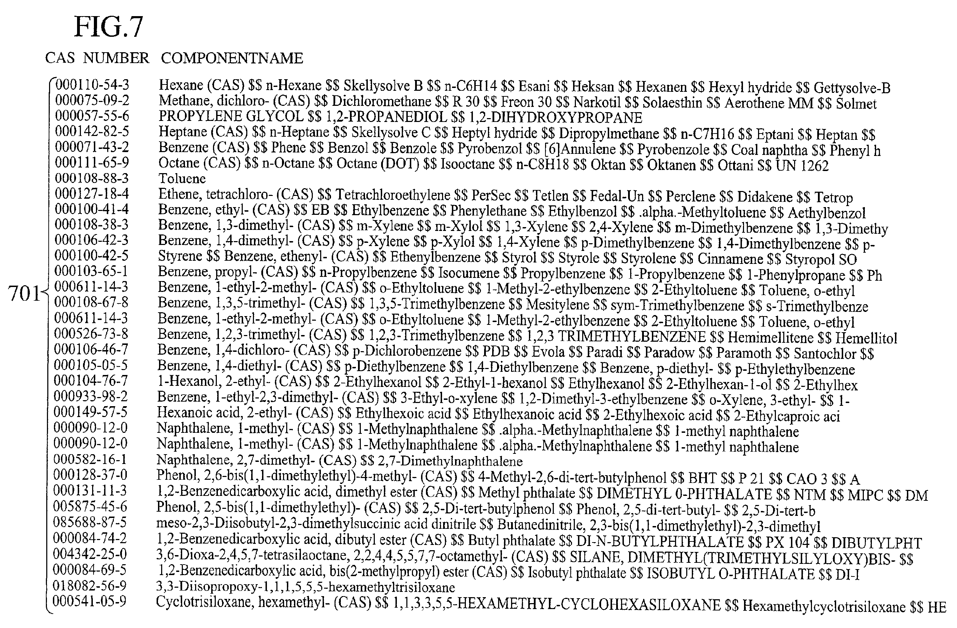

Fig. 7 shows an example of data 701 included in the impurity database. As shown in the figure, impurity components 701 stored or registered in the impurity database are environmental pollution substances alkylbenzene, toluene, xylene, benzene, hydrocarbon, pentane, and hexane and the like, organic solvents such as dichloromethane, acetone, trichloromethane and the like, plasticizers, additives such as styrene, 2-ethylhexanol, BHT and the like, environmental hormone related substances such as dioxityl sterate, dibutyle phthalate, and substances originating in analysis apparatus such as silicon compounds, hydrocarbon and the like.

Referring again to Fig. 4, the fragrance data analysis section 102 will compare by search by means of a database management, the CAS number of the component data 201 and 301 inputted by the data input section 101 and the CAS number of the impurity data 701 from the impurity database 110. The components with CAS numbers which coincide (i.e. which exist in the component data 201 and 701 or in the component data 301 and 701) will then be taken as impurity components and will be deleted from the data list 201, 301 of component analysis . Then the data list of the rest of the fragrance components will be outputted to the reproduction prescription preparation management section 103.

The component list 215 in Fig. 5 shows the fragrance component data list obtained by excluding the impurity component (IMPURITY) from the data list 201 of components analyzed by the canister method. Also the component list 315 in Fig. 6B is the fragrance component data list obtained by excluding the impurity component (IMPURITY) from the data list 301 of components analyzed by the adsorption method.

Referring again to Fig. 4, the vapor pressure database in the memory section 111 stores vapor pressure values of each fragrance component with the CAS number as the search key. Therefore similar to the impurity database, this database may be searched with the CAS number.

The reproduction prescription preparation management section 103 receives data lists 215, 315 shown in Figs. 5 and 6 from the fragrance data analysis section 102 and combines or add ups the two data lists.

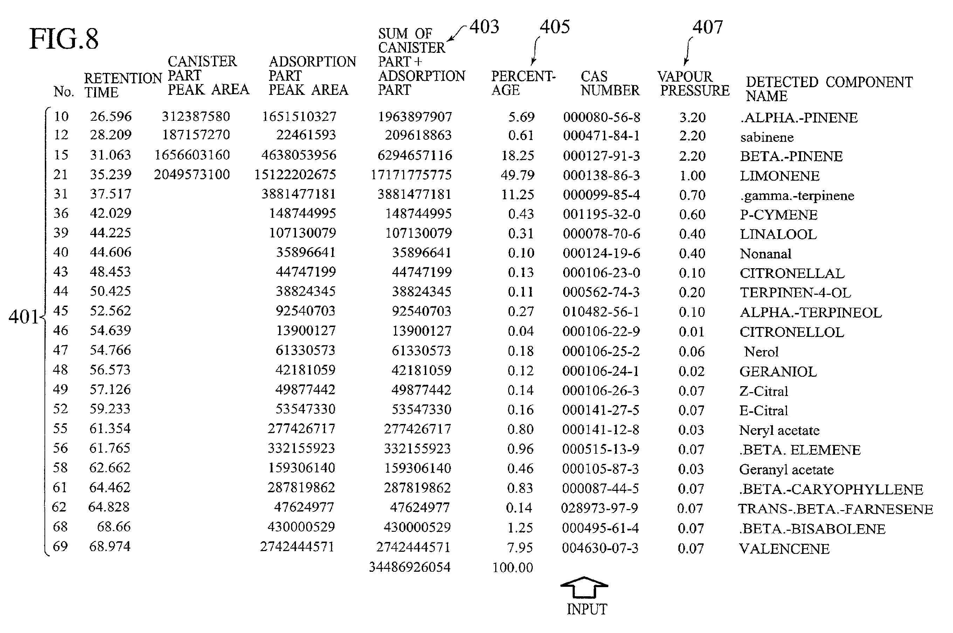

Fig. 8 shows an example of the combined fragrance component 401. In particular column 403 shows the added up value of each component.

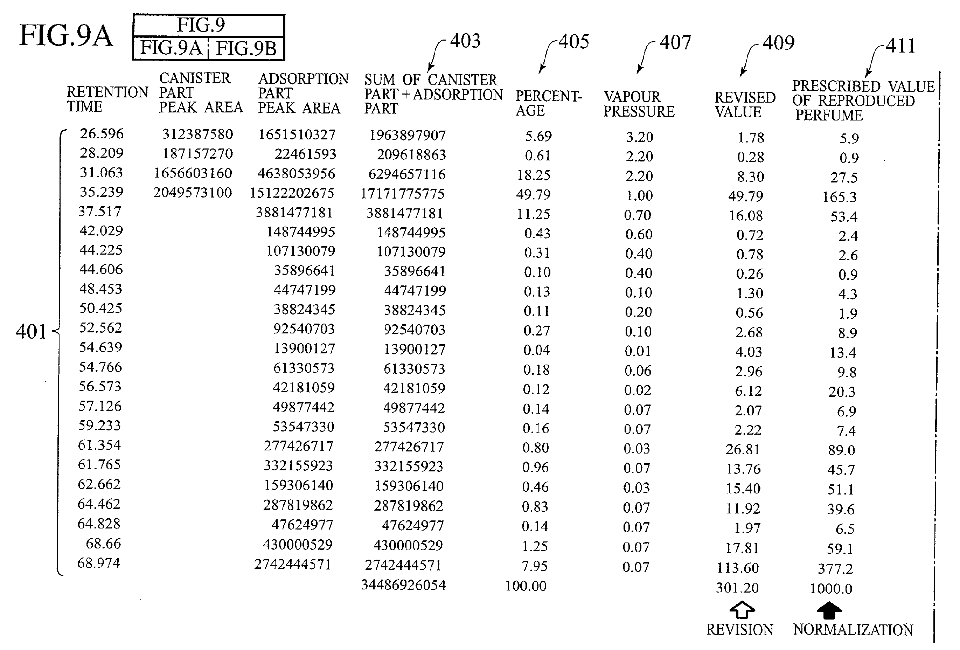

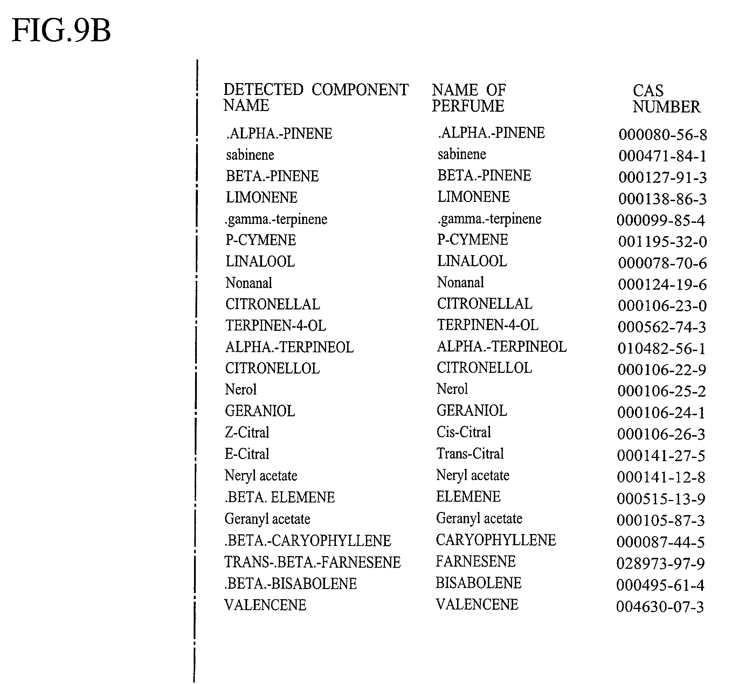

The reproduction prescription preparation management section 103 also calculates the content ratio 405 of each fragrance component relative to the total components and divides the ratio 405 by the vapor pressure value 407 of each fragrance component to obtain the revised value 409 shown in Fig. 9; the revised value 409 is equal to the ratio 405 divided by the vapor pressure value 407, i.e. (revised value 409)= (ratio 405)/(vapor pressure 407).

The reproduction prescription preparation management section 103 also calculates the prescribed quantity 411 for preparing fragrance by normalizing (normalized by 1000) the revised value. Specifically, the reproduced fragrance prescribed amount may be calculated by the following equation according to Raoult's law,

$$\mathrm{Prescribed\ amount} = \frac{\mathrm{content\ ratio\ n}/\mathrm{vapour\ pressure\ value\ n}}{\displaystyle\sum_{n=1}^{N}\mathrm{content\ ratio\ n}\Big/\mathrm{vapour\ pressure\ value\ n}} \times 1000$$

By referring again to Fig. 4, the data output section 104 outputs a data list that includes prescribed amounts 411 of each fragrance component as shown in Fig. 9. This data output may include monitor output, printer output and file output. In this way each fragrance component may be synthesized based on the prescribed amount of each fragrance component. That is almost the same fragrance which human sense by the olfactory organ may be reproduced chemically.

As can be understood from the explanation above, by use of the fragrance collecting apparatus of this embodiment, ingredients with low volatility to high volatility may be collected with high precision without a complicated apparatus.

In more detail, by this fragrance collecting apparatus and fragrance collecting methods, the low to medium volatile components may be collected well by adsorption by the absorber, and high volatile components that could not be collected by the absorber may be collected by a decompressed hermetically sealed vessel like a canister. Therefore in this embodiment, by use of the adsorption method and canister method complementary, fragrance components over a wide range from low volatile components to high volatile components may be collected with high precision. Therefore by this embodiment, all components of fragrance of nature, such as flowering plants and the like may be analyzed quantitatively with high precision.

Also in the fragrance analysis method by this embodiment, the fragrance component data list is prepared with the impurity components omitted from the original data list that is obtained by component analysis, by computer data processing. Thereby the data list of fragrance components without data of impurity components may be acquired efficiently.

Also in this embodiment of reproduced fragrance data preparation methods, the list of reproduced fragrance prescription values of the fragrance components may be acquired effectively by use of suitable computer programs and the database of the vapor pressure of the fragrance components. Therefore, with this reproduced fragrance data preparation method, in combination with the fragrance collection method and the fragrance analysis method, precise fragrance reproduction data or information may be acquired efficiently by a series of established methods.

The other embodiment of this invention is a perfumery production method based on the data of fragrance components analyzed by the fragrance analysis method or the data of fragrance components prepared by the fragrance reproduction data preparation method. This method is to produce perfumery that generates the fragrance component. In more detail in this production method, perfumery is produced by prescribing each fragrance component based on the prescription quantity 411.

According to this embodiment, fragrance existing in nature may be readily reproduced chemically. In other words, fragrance composition close to natural fragrance may be reproduced readily. That is, the fragrance of natural environment may be easily embodied by this method.


**Claims**

1. A fragrance collection apparatus for collecting fragrance components in the headspace gas, comprising an adsorption vessel with an adsorption layer and a decompressed sealed vessel connected to the adsorption vessel.

2. A method of fragrance collection for collecting fragrance components in the headspace gas by use of an adsorption vessel with an adsorption layer and the decompressed sealed vessel that acts as a negative pressure source.

3. A fragrance analysis method comprising the steps of:

   collecting fragrance components in the headspace gas by use of an adsorption vessel with an adsorption layer and the decompressed sealed vessel that acts as a negative pressure source, and
   analyzing components adsorbed on the adsorption layer of the adsorption vessel and headspace gas component sucked into the decompressed sealed vessel.

4. Fragrance analysis method of claim 3, further comprising calculating headspace gas components by combining or synthesizing the components adsorbed on the adsorption layer and the headspace gas component sucked in the decompressed sealed vessel.

5. A method of analyzing fragrance data by use of a computer, comprising the steps of:

   storing data of impurities in a memory,
   entering the result of component analysis of a fragrance object analyzed by an analyzer,
   comparing the entered data of component analysis and the data of impurities by computer processing,
   removing components which are regarded as impurities from the component analysis data by computer processing,
   outputting a list of fragrance component with the data of impurity components removed.

6. The fragrance analysis method of claim 5 where the data of components collected by the fragrance collection apparatus of claim 1 or collected by the method of claim 2 and analyzed by the fragrance analysis method of claim 3 or fragrance analysis method of claim 4 are entered.

7. A method for obtaining data for reproduction fragrance by use of a programmed computer, comprising the steps of:

   storing data of the vapor pressure value of each fragrance component in a memory,
   entering data of fragrance components of the reproduction fragrance objects,
   calculating content ratio of each fragrance component of the entered data to the total components thereof,
   revising the calculated content ratio of each fragrance component according to the vapor pressure value of each fragrance component stored in the memory, and
   outputting the reproduction fragrance prescribed value.

8. The reproduction fragrance collection method of claim 7 where the data of fragrance components analyzed by the fragrance analysis method of claim 3 or fragrance analysis method of claim 4 or 5 is entered.

9. Method of producing perfumery on the basis of the fragrance component data analyzed by the fragrance analysis method or the reproduction fragrance data obtaining method of either one of the claims 4 to 8, the perfumery substantially including the fragrance components analyzed by the fragrance analysis method.

10. An apparatus for analyzing fragrance data by use of a computer, comprising:

a memory (110) for storing data of impurities,
an input device for entering data of components emanated from a fragrance object and analyzed by an analyzer,
a module (102) for comparing the entered data by the input device and the data of impurities, and removing components that are regarded as impurities from the entered data.

# FIG.1

# FIG.2A

# FIG.2B

# FIG.3A

# FIG.3B

# FIG.4

DATA LIST OF COMPONENT ANALYSIS

~100

| DATA INPUT SECTION | ~101 |

FRAGRANCE DATA
ANALYSIS SECTION ~102

IMPURITY
DATABASE 110

DATA LIST OF
FRAGRANCE COMPONENTS

FRAGRANCE REPRODUCTION
PRESCRIPTION PREPARATION
SECTION ~103

VAPOUR
PRESSURE
DATABASE 111

REPRODUCED FRAGRANCE
PRESCRIBE VALUES
DATA LIST

| DATA OUTPUT SECTION | ~104 |

FIG.5

| RETENTION TIME (203) | PEAK AREA (205) | % (207) | CAS NUMBER (209) | MAYBE | DETECTED COMPONENT NAME (211) | |
|---|---|---|---|---|---|---|
| 3.575 | 380318500 | 1.438 | 000124-38-9 | IMPURITY1 | Carbon dioxide (CAS) $$ Dry ice $$ R 744 $$ Carbonic acid gas $$ Carbonic anhydride $$ Carbon oxide (CO | |
| 3.799 | 13811433450 | 52.218 | 000124-38-9 | IMPURITY1 | Carbon dioxide (CAS) $$ Dry ice $$ R 744 $$ Carbonic acid gas $$ Carbonic anhydride $$ Carbon oxide (CO | |
| 4.28 | 3581686260 | 13.542 | 000124-38-9 | IMPURITY1 | Carbon dioxide (CAS) $$ Dry ice $$ R 744 $$ Carbonic acid gas $$ Carbonic anhydride $$ Carbon oxide (CO | ATMOSPHERE |
| 5.134 | 431232430 | 1.63 | 000067-64-1 | IMPURITY1 | 2-Propanone (CAS) $$ Acetone $$ propan-2-one $$ Propanone $$ Methyl ketone $$ Dimethyl ketone $$ Pyroac | ORGANIC SOLVENT |
| 5.619 | 288762510 | 1.092 | 000075-09-2 | IMPURITY1 | Methane, dichloro- (CAS) $$ Dichloromethane $$ R 30 $$ Freon 30 $$ Narkotil $$ Solaesthin $$ Aerothene | ORGANIC SOLVENT |
| 5.715 | 179167780 | 0.677 | 000075-09-2 | IMPURITY1 | Methane, dichloro- (CAS) $$ Dichloromethane $$ R 30 $$ Freon 30 $$ Narkotil $$ Solaesthin $$ Aerothene | ORGANIC SOLVENT |
| 5.881 | 191829140 | 0.725 | 000124-38-9 | IMPURITY1 | Carbon dioxide (CAS) $$ Dry ice $$ R 744 $$ Carbonic acid gas $$ Carbonic anhydride $$ Carbon oxide (CO | ATMOSPHERE |
| 5.988 | 130795990 | 0.495 | 000124-38-9 | IMPURITY1 | Carbon dioxide (CAS) $$ Dry ice $$ R 744 $$ Carbonic acid gas $$ Carbonic anhydride $$ Carbon oxide (CO | ATMOSPHERE |
| 19.362 | 348120240 | 1.316 | 000100-41-4 | IMPURITY1 | Benzene, ethyl- (CAS) $$ EB $$ Ethylbenzene $$ Phenylethane $$ Ethylbenzol $$ .alpha.-Methyltoluene $$ | ATMOSPHERE POLLUTION |
| 19.933 | 1141611250 | 4.316 | 000106-42-3 | IMPURITY1 | p-Xylene | ATMOSPHERE POLLUTION |
| 21.507 | 324714710 | 1.228 | 000106-42-3 | IMPURITY1 | p-Xylene | ATMOSPHERE POLLUTION |
| 25.349 | 312387580 | 1.181 | 000080-56-8 | ----------- | .ALPHA.-PINENE | |
| 27.943 | 187157270 | 0.708 | 003387-41-5 | ----------- | sabinene | |
| 28.381 | 1656603160 | 6.263 | 000127-91-3 | ----------- | .BETA.-PINENE | |
| 32.127 | 2049573100 | 7.749 | 000138-86-3 | ----------- | LIMONENE | |
| 126.414 | 85551060 | 0.323 | 000541-05-9 | IMPURITY1 | Cyclotrisiloxane, hexamethyl- (CAS) $$ 1,1,3,3,5,5-HEXAMETHYL-CYCLOHEXASILOXANE $$ Hexamethylcyclotrisi | COLUMN ORIGINATED IMPURITY |

(201)

⇩ IMPURITY SEPARATION

| | | | | | | |
|---|---|---|---|---|---|---|
| 25.349 | 312387580 | 1.181 | 000080-56-8 | ----------- | .ALPHA.-PINENE | |
| 27.943 | 187157270 | 0.708 | 003387-41-5 | ----------- | Sabinene | |
| 28.381 | 1656603160 | 6.263 | 000127-91-3 | ----------- | .BETA.-PINENE | |
| 32.127 | 2049573100 | 7.749 | 000138-86-3 | ----------- | LIMONENE | |

(215)

EP 1 236 997 A2

# FIG.6A

| RETENTION TIME | PEAK AREA | PERCENT-AGE | CAS NUMBER | MAYBE | DETECTED COMPONENT NAME | |
|---|---|---|---|---|---|---|
| 4.925 | 298777659 | 0.773 | 000124-38-9 | IMPURITY1 | Carbon dioxide | ATMOSPHERE POLLUTION |
| 7.719 | 12976262 | 0.034 | 000110-54-3' | IMPURITY1 | Hexane | ORGANIC SOLVENT |
| 8.018 | 33598592 | 0.087 | 000075-09-2 | IMPURITY1 | Methane, dichloro- | ORGANIC SOLVENT |
| 17.251 | 44571695 | 0.115 | 000108-88-3 | IMPURITY1 | Toluene | ATMOSPHERE POLLUTION |
| 26.596 | 1651510327 | 4.273 | 000080-56-8 | -------- | .ALPHA.-PINENE | |
| 28.209 | 22461593 | 0.058 | 000471-84-1 | -------- | sabinene | |
| 31.063 | 4638053956 | 12.001 | 000127-91-3 | -------- | BETA.-PINENE | |
| 35.239 | 15122202675 | 39.13 | 000138-86-3 | -------- | LIMONENE | |
| 37.517 | 3881477181 | 10.043 | 000099-85-4 | -------- | .gamma.-terpinene | |
| 38.339 | 17536448 | 0.045 | 037148-64-4 | IMPURITY1 | Benzeneacetic a | COLUMN ORIGINATED IMPURITY |
| 42.029 | 148744995 | 0.385 | 001195-32-0 | -------- | P-CYMENE | |
| 44.225 | 107130079 | 0.277 | 000078-70-6 | -------- | LINALOOL L | |
| 44.606 | 35896641 | 0.093 | 000124-19-6 | -------- | Nonanal | |
| 48.453 | 44747199 | 0.116 | 000106-23-0 | -------- | CITRONELLAL | |
| 50.425 | 38824345 | 0.1 | 000562-74-3 | -------- | TERPINEN-4-OL | |
| 52.562 | 92540703 | 0.239 | 010482-56-1 | -------- | ALPHA.-TERPINEOL | |
| 54.639 | 13900127 | 0.036 | 000106-22-9 | -------- | CITRONELLOL | |
| 54.766 | 61330573 | 0.159 | 000106-25-2 | -------- | Nerol | |
| 56.573 | 42181059 | 0.109 | 000106-24-1 | -------- | GERANIOL | |
| 57.126 | 49877442 | 0.129 | 000106-26-3 | -------- | Z-Citral | |
| 59.083 | 19921850 | 0.052 | 000629-59-4 | IMPURITY1 | Tetradecane | ADSORPTION MATERIAL ORIGINATED IMPURITY |
| 59.233 | 53547330 | 0.139 | 000141-27-5 | -------- | E-Citral | |
| 61.354 | 277426717 | 0.718 | 000141-12-8 | -------- | Neryl acetate | |
| 61.765 | 332155923 | 0.859 | 000515-13-9 | -------- | .BETA. ELEMENE | |
| 62.662 | 159306140 | 0.412 | 000105-87-3 | -------- | Geranyl acetate | |
| 64.462 | 287819862 | 0.745 | 000087-44-5 | -------- | .BETA.-CARYOPHYLLENE | |
| 64.828 | 47624977 | 0.123 | 028973-97-9 | -------- | TRANS-.BETA.-FARNESENE | |
| 68.66 | 430000529 | 1.113 | 000495-61-4 | -------- | .BETA.-BISABOLENE | |
| 68.974 | 2742444571 | 7.096 | 004630-07-3 | -------- | VALENCENE | |

303 305 307 309 311

301

EP 1 236 997 A2

# FIG.6B

⬇ IMPURITY SEPARATED

315 {

| | | | | | |
|---|---|---|---|---|---|
| 26.596 | 1651510327 | 4.273 | 000080-56-8 | -------- | .ALPHA.-PINENE |
| 28.209 | 22461593 | 0.058 | 000471-84-1 | -------- | Sabinene |
| 31.063 | 4638053956 | 12.001 | 000127-91-3 | -------- | BETA.-PINENE |
| 35.239 | 15122202675 | 39.13 | 000138-86-3 | -------- | LIMONENE |
| 37.517 | 3881477181 | 10.043 | 000099-85-4 | -------- | .gamma.-terpinene |
| 42.029 | 148744995 | 0.385 | 001195-32-0 | -------- | P-CYMENE |
| 44.225 | 107130079 | 0.277 | 000078-70-6 | -------- | LINALOOL L |
| 44.606 | 35896641 | 0.093 | 000124-19-6 | -------- | Nonanal |
| 48.453 | 44747199 | 0.116 | 000106-23-0 | -------- | CITRONELLAL |
| 50.425 | 38824345 | 0.1 | 000562-74-3 | -------- | TERPINEN-4-OL |
| 52.562 | 92540703 | 0.239 | 010482-56-1 | -------- | ALPHA.-TERPINEOL |
| 54.639 | 13900127 | 0.036 | 000106-22-9 | -------- | CITRONELLOL |
| 54.766 | 61330573 | 0.159 | 000106-25-2 | -------- | Nerol |
| 56.573 | 42181059 | 0.109 | 000106-24-1 | -------- | GERANIOL |
| 57.126 | 49877442 | 0.129 | 000106-26-3 | -------- | Z-Citral |
| 59.233 | 53547330 | 0.139 | 000141-27-5 | -------- | E-Citral |
| 61.354 | 277426717 | 0.718 | 000141-12-8 | -------- | Neryl acetate |
| 61.765 | 332155923 | 0.859 | 000515-13-9 | -------- | .BETA. ELEMENE |
| 62.662 | 159306140 | 0.412 | 000105-87-3 | -------- | Geranyl acetate |
| 64.462 | 287819862 | 0.745 | 000087-44-5 | -------- | .BETA.-CARYOPHYLLENE |
| 64.828 | 47624977 | 0.123 | 028973-97-9 | -------- | TRANS-.BETA.-FARNESENE |
| 68.66 | 430000529 | 1.113 | 000495-61-4 | -------- | .BETA.-BISABOLENE |
| 68.974 | 2742444571 | 7.096 | 004630-07-3 | -------- | VALENCENE |

# FIG.7

CAS NUMBER  COMPONENTNAME

701
- 000110-54-3  Hexane (CAS) $$ n-Hexane $$ Skellysolve B $$ n-C6H14 $$ Esani $$ Heksan $$ Hexanen $$ Hexyl hydride $$ Gettysolve-B
- 000075-09-2  Methane, dichloro- (CAS) $$ Dichloromethane $$ R 30 $$ Freon 30 $$ Narkotil $$ Solaesthin $$ Aerothene MM $$ Solmet
- 000057-55-6  PROPYLENE GLYCOL $$ 1,2-PROPANEDIOL $$ 1,2-DIHYDROXYPROPANE
- 000142-82-5  Heptane (CAS) $$ n-Heptane $$ Skellysolve C $$ Heptyl hydride $$ Dipropylmethane $$ n-C7H16 $$ Eptani $$ Heptan $$
- 000071-43-2  Benzene (CAS) $$ Phene $$ Benzol $$ Benzole $$ Pyrobenzol $$ [6]Annulene $$ Pyrobenzole $$ Coal naphtha $$ Phenyl h
- 000111-65-9  Octane (CAS) $$ n-Octane $$ Octane (DOT) $$ Isooctane $$ n-C8H18 $$ Oktan $$ Oktanen $$ Ottani $$ UN 1262
- 000108-88-3  Toluene
- 000127-18-4  Ethene, tetrachloro- (CAS) $$ Tetrachloroethylene $$ PerSec $$ Tetlen $$ Fedal-Un $$ Perclene $$ Didakene $$ Tetrop
- 000100-41-4  Benzene, ethyl- (CAS) $$ EB $$ Ethylbenzene $$ Phenylethane $$ Ethylbenzol $$ .alpha.-Methyltoluene $$ Aethylbenzol
- 000108-38-3  Benzene, 1,3-dimethyl- (CAS) $$ m-Xylene $$ m-Xylol $$ 1,3-Xylene $$ 2,4-Xylene $$ m-Dimethylbenzene $$ 1,3-Dimethy
- 000106-42-3  Benzene, 1,4-dimethyl- (CAS) $$ p-Xylene $$ p-Xylol $$ 1,4-Xylene $$ p-Dimethylbenzene $$ 1,4-Dimethylbenzene $$ p-
- 000100-42-5  Styrene $$ Benzene, ethenyl- (CAS) $$ Ethenylbenzene $$ Styrol $$ Styrole $$ Styrolene $$ Cinnamene $$ Styropol SO
- 000103-65-1  Benzene, propyl- (CAS) $$ n-Propylbenzene $$ Isocumene $$ Propylbenzene $$ 1-Propylbenzene $$ 1-Phenylpropane $$ Ph
- 000611-14-3  Benzene, 1-ethyl-2-methyl- (CAS) $$ o-Ethyltoluene $$ 1-Methyl-2-ethylbenzene $$ 2-Ethyltoluene $$ Toluene, o-ethyl
- 000108-67-8  Benzene, 1,3,5-trimethyl- (CAS) $$ 1,3,5-Trimethylbenzene $$ Mesitylene $$ sym-Trimethylbenzene $$ s-Trimethylbenze
- 000611-14-3  Benzene, 1-ethyl-2-methyl- (CAS) $$ o-Ethyltoluene $$ 1-Methyl-2-ethylbenzene $$ 2-Ethyltoluene $$ Toluene, o-ethyl
- 000526-73-8  Benzene, 1,2,3-trimethyl- (CAS) $$ 1,2,3-Trimethylbenzene $$ 1,2,3 TRIMETHYLBENZENE $$ Hemimellitene $$ Hemellitol
- 000106-46-7  Benzene, 1,4-dichloro- (CAS) $$ p-Dichlorobenzene $$ PDB $$ Evola $$ Paradi $$ Paradow $$ Paramoth $$ Santochlor $$
- 000105-05-5  Benzene, 1,4-diethyl- (CAS) $$ p-Diethylbenzene $$ 1,4-Diethylbenzene $$ Benzene, p-diethyl- $$ p-Ethylethylbenzene
- 000104-76-7  1-Hexanol, 2-ethyl- (CAS) $$ 2-Ethylhexanol $$ 2-Ethyl-1-hexanol $$ Ethylhexanol $$ 2-Ethylhexan-1-ol $$ 2-Ethylhex
- 000933-98-2  Benzene, 1-ethyl-2,3-dimethyl- (CAS) $$ 3-Ethyl-o-xylene $$ 1,2-Dimethyl-3-ethylbenzene $$ o-Xylene, 3-ethyl- $$ 1-
- 000149-57-5  Hexanoic acid, 2-ethyl- (CAS) $$ Ethylhexoic acid $$ Ethylhexanoic acid $$ 2-Ethylhexoic acid $$ 2-Ethylcaproic aci
- 000090-12-0  Naphthalene, 1-methyl- (CAS) $$ 1-Methylnaphthalene $$ .alpha.-Methylnaphthalene $$ 1-methyl naphthalene
- 000090-12-0  Naphthalene, 1-methyl- (CAS) $$ 1-Methylnaphthalene $$ .alpha.-Methylnaphthalene $$ 1-methyl naphthalene
- 000582-16-1  Naphthalene, 2,7-dimethyl- (CAS) $$ 2,7-Dimethylnaphthalene
- 000128-37-0  Phenol, 2,6-bis(1,1-dimethylethyl)-4-methyl- (CAS) $$ 4-Methyl-2,6-di-tert-butylphenol $$ BHT $$ P 21 $$ CAO 3 $$ A
- 000131-11-3  1,2-Benzenedicarboxylic acid, dimethyl ester (CAS) $$ Methyl phthalate $$ DIMETHYL 0-PHTHALATE $$ NTM $$ MIPC $$ DM
- 005875-45-6  Phenol, 2,5-bis(1,1-dimethylethyl)- (CAS) $$ 2,5-Di-tert-butylphenol $$ Phenol, 2,5-di-tert-butyl- $$ 2,5-Di-tert-b
- 085688-87-5  meso-2,3-Diisobutyl-2,3-dimethylsuccinic acid dinitrile $$ Butanedinitrile, 2,3-bis(1,1-dimethylethyl)-2,3-dimethyl
- 000084-74-2  1,2-Benzenedicarboxylic acid, dibutyl ester (CAS) $$ Butyl phthalate $$ DI-N-BUTYLPHTHALATE $$ PX 104 $$ DIBUTYLPHT
- 004342-25-0  3,6-Dioxa-2,4,5,7-tetrasilaoctane, 2,2,4,4,5,5,7,7-octamethyl- (CAS) $$ SILANE, DIMETHYL(TRIMETHYLSILYLOXY)BIS- $$
- 000084-69-5  1,2-Benzenedicarboxylic acid, bis(2-methylpropyl) ester (CAS) $$ Isobutyl phthalate $$ ISOBUTYL 0-PHTHALATE $$ DI-I
- 018082-56-9  3,3-Diisopropoxy-1,1,1,5,5,5-hexamethyltrisiloxane
- 000541-05-9  Cyclotrisiloxane, hexamethyl- (CAS) $$ 1,1,3,3,5,5-HEXAMETHYL-CYCLOHEXASILOXANE $$ Hexamethylcyclotrisiloxane $$ HE

# FIG.8

| No. | RETENTION TIME | CANISTER PART PEAK AREA | ADSORPTION PART PEAK AREA | SUM OF CANISTER PART + ADSORPTION PART | PERCENT-AGE | CAS NUMBER | VAPOUR PRESSURE | DETECTED COMPONENT NAME |
|---|---|---|---|---|---|---|---|---|
| 10 | 26.596 | 312387580 | 1651510327 | 1963897907 | 5.69 | 000080-56-8 | 3.20 | .ALPHA.-PINENE |
| 12 | 28.209 | 187157270 | 22461593 | 209618863 | 0.61 | 000471-84-1 | 2.20 | sabinene |
| 15 | 31.063 | 1656603160 | 4638053956 | 6294657116 | 18.25 | 000127-91-3 | 2.20 | BETA.-PINENE |
| 21 | 35.239 | 2049573100 | 15122202675 | 17171775775 | 49.79 | 000138-86-3 | 1.00 | LIMONENE |
| 31 | 37.517 | | 3881477181 | 3881477181 | 11.25 | 000099-85-4 | 0.70 | .gamma.-terpinene |
| 36 | 42.029 | | 148744995 | 148744995 | 0.43 | 001195-32-0 | 0.60 | P-CYMENE |
| 39 | 44.225 | | 107130079 | 107130079 | 0.31 | 000078-70-6 | 0.40 | LINALOOL |
| 40 | 44.606 | | 35896641 | 35896641 | 0.10 | 000124-19-6 | 0.40 | Nonanal |
| 43 | 48.453 | | 44747199 | 44747199 | 0.13 | 000106-23-0 | 0.10 | CITRONELLAL |
| 44 | 50.425 | | 38824345 | 38824345 | 0.11 | 000562-74-3 | 0.20 | TERPINEN-4-OL |
| 45 | 52.562 | | 92540703 | 92540703 | 0.27 | 010482-56-1 | 0.10 | ALPHA.-TERPINEOL |
| 46 | 54.639 | | 13900127 | 13900127 | 0.04 | 000106-22-9 | 0.01 | CITRONELLOL |
| 47 | 54.766 | | 61330573 | 61330573 | 0.18 | 000106-25-2 | 0.06 | Nerol |
| 48 | 56.573 | | 42181059 | 42181059 | 0.12 | 000106-24-1 | 0.02 | GERANIOL |
| 49 | 57.126 | | 49877442 | 49877442 | 0.14 | 000106-26-3 | 0.07 | Z-Citral |
| 52 | 59.233 | | 53547330 | 53547330 | 0.16 | 000141-27-5 | 0.07 | E-Citral |
| 55 | 61.354 | | 277426717 | 277426717 | 0.80 | 000141-12-8 | 0.03 | Neryl acetate |
| 56 | 61.765 | | 332155923 | 332155923 | 0.96 | 000515-13-9 | 0.07 | .BETA. ELEMENE |
| 58 | 62.662 | | 159306140 | 159306140 | 0.46 | 000105-87-3 | 0.03 | Geranyl acetate |
| 61 | 64.462 | | 287819862 | 287819862 | 0.83 | 000087-44-5 | 0.07 | .BETA.-CARYOPHYLLENE |
| 62 | 64.828 | | 47624977 | 47624977 | 0.14 | 028973-97-9 | 0.07 | TRANS-.BETA.-FARNESENE |
| 68 | 68.66 | | 430000529 | 430000529 | 1.25 | 000495-61-4 | 0.07 | .BETA.-BISABOLENE |
| 69 | 68.974 | | 2742444571 | 2742444571 | 7.95 | 004630-07-3 | 0.07 | VALENCENE |
| | | | | 34486926054 | 100.00 | | | |

401

403 405 407

↑ INPUT

# FIG.9A

| FIG.9 | |
|---|---|
| FIG.9A | FIG.9B |

| RETENTION TIME | CANISTER PART PEAK AREA | ADSORPTION PART PEAK AREA | SUM OF CANISTER PART + ADSORPTION PART [403] | PERCENT-AGE [405] | VAPOUR PRESSURE [407] | REVISED VALUE [409] | PRESCRIBED VALUE OF REPRODUCED PERFUME [411] |
|---|---|---|---|---|---|---|---|
| 26.596 | 312387580 | 1651510327 | 1963897907 | 5.69 | 3.20 | 1.78 | 5.9 |
| 28.209 | 187157270 | 22461593 | 209618863 | 0.61 | 2.20 | 0.28 | 0.9 |
| 31.063 | 1656603160 | 4638053956 | 6294657116 | 18.25 | 2.20 | 8.30 | 27.5 |
| 35.239 | 2049573100 | 15122202675 | 17171775775 | 49.79 | 1.00 | 49.79 | 165.3 |
| 37.517 | | 3881477181 | 3881477181 | 11.25 | 0.70 | 16.08 | 53.4 |
| 42.029 | | 148744995 | 148744995 | 0.43 | 0.60 | 0.72 | 2.4 |
| 44.225 | | 107130079 | 107130079 | 0.31 | 0.40 | 0.78 | 2.6 |
| 44.606 | | 35896641 | 35896641 | 0.10 | 0.40 | 0.26 | 0.9 |
| 48.453 | | 44747199 | 44747199 | 0.13 | 0.10 | 1.30 | 4.3 |
| 50.425 | | 38824345 | 38824345 | 0.11 | 0.20 | 0.56 | 1.9 |
| 52.562 | | 92540703 | 92540703 | 0.27 | 0.10 | 2.68 | 8.9 |
| 54.639 | | 13900127 | 13900127 | 0.04 | 0.01 | 4.03 | 13.4 |
| 54.766 | | 61330573 | 61330573 | 0.18 | 0.06 | 2.96 | 9.8 |
| 56.573 | | 42181059 | 42181059 | 0.12 | 0.02 | 6.12 | 20.3 |
| 57.126 | | 49877442 | 49877442 | 0.14 | 0.07 | 2.07 | 6.9 |
| 59.233 | | 53547330 | 53547330 | 0.16 | 0.07 | 2.22 | 7.4 |
| 61.354 | | 277426717 | 277426717 | 0.80 | 0.03 | 26.81 | 89.0 |
| 61.765 | | 332155923 | 332155923 | 0.96 | 0.07 | 13.76 | 45.7 |
| 62.662 | | 159306140 | 159306140 | 0.46 | 0.03 | 15.40 | 51.1 |
| 64.462 | | 287819862 | 287819862 | 0.83 | 0.07 | 11.92 | 39.6 |
| 64.828 | | 47624977 | 47624977 | 0.14 | 0.07 | 1.97 | 6.5 |
| 68.66 | | 430000529 | 430000529 | 1.25 | 0.07 | 17.81 | 59.1 |
| 68.974 | | 2742444571 | 2742444571 | 7.95 | 0.07 | 113.60 | 377.2 |
| | | | 34486926054 | 100.00 | | 301.20 | 1000.0 |
| | | | | | | ⇧ REVISION | ⬆ NORMALIZATION |

401

EP 1 236 997 A2

# FIG.9B

| DETECTED COMPONENT NAME | NAME OF PERFUME | CAS NUMBER |
|---|---|---|
| .ALPHA.-PINENE | .ALPHA.-PINENE | 000080-56-8 |
| sabinene | sabinene | 000471-84-1 |
| BETA.-PINENE | BETA.-PINENE | 000127-91-3 |
| LIMONENE | LIMONENE | 000138-86-3 |
| .gamma.-terpinene | .gamma.-terpinene | 000099-85-4 |
| P-CYMENE | P-CYMENE | 001195-32-0 |
| LINALOOL | LINALOOL | 000078-70-6 |
| Nonanal | Nonanal | 000124-19-6 |
| CITRONELLAL | CITRONELLAL | 000106-23-0 |
| TERPINEN-4-OL | TERPINEN-4-OL | 000562-74-3 |
| ALPHA.-TERPINEOL | ALPHA.-TERPINEOL | 010482-56-1 |
| CITRONELLOL | CITRONELLOL | 000106-22-9 |
| Nerol | Nerol | 000106-25-2 |
| GERANIOL | GERANIOL | 000106-24-1 |
| Z-Citral | Cis-Citral | 000106-26-3 |
| E-Citral | Trans-Citral | 000141-27-5 |
| Neryl acetate | Neryl acetate | 000141-12-8 |
| .BETA. ELEMENE | ELEMENE | 000515-13-9 |
| Geranyl acetate | Geranyl acetate | 000105-87-3 |
| .BETA.-CARYOPHYLLENE | CARYOPHYLLENE | 000087-44-5 |
| TRANS-.BETA.-FARNESENE | FARNESENE | 028973-97-9 |
| .BETA.-BISABOLENE | BISABOLENE | 000495-61-4 |
| VALENCENE | VALENCENE | 004630-07-3 |

EP 1 236 997 A2